# FASCICULE DE BREVET EUROPEEN

(11) **EP 4 028 246 B1**
(45) Date de publication et mention de la délivrance du brevet: **07.01.2026**
(21) Numéro de dépôt: 20768044.8
(22) Date de dépôt: 10.09.2020
(51) Int. Cl.: B29C 65/02, B29C 65/34, G01B 11/30, F16L 47/02, F16L 47/03, F16L 47/26, B29L 23/00, B29K 23/00

(54) **PROCÉDÉ DE VÉRIFICATION ET DISPOSITIF DE MESURE AVANT SOUDAGE DE COMPOSANTS D'UNE CANALISATION**
VERFAHREN ZUM PRÜFEN UND VORRICHTUNG ZUM MESSEN VON BAUTEILEN EINES ROHRES VOR DEM SCHWEISSEN
METHOD FOR CHECKING, AND DEVICE FOR MEASURING, COMPONENTS OF A PIPE PRIOR TO WELDING

(30) Priorité: 12.09.2019 FR 1910096
(43) Date de publication de la demande: 20.07.2022
(73) Titulaire: GRTgaz, 92277 Bois-Colombes Cedex (FR)
(72) Inventeur: AUSSANT, Pascal, 95800 Cergy-le-Haut (FR); GUEUGNAUT, Dominique, 75005 Paris (FR)
(74) Mandataire: LLR
(86) Numéro de dépôt international: PCT/EP2020/075282
(87) Numéro de publication internationale: WO 2021/048253

(56) Documents cités:
- FR-A1- 2 572 326
- US-B1- 6 858 822

## Description

**L'invention** concerne le domaine des canalisations de distribution de gaz, en matière polymère. Plus précisément, l'invention concerne le soudage de plusieurs jonctions de ces canalisations.

Actuellement, plus de 200 000 jonctions sont réalisées chaque année sur le réseau de distribution de gaz national en France. La majorité de ces jonctions sont réalisées automatiquement au moyen d'automates, selon des technologies connues dans l'état de la technique, comme par exemple le soudage bout à bout ou le soudage par électro-fusion.

On connaît d'après le brevet FR 2 572 326 des automates de soudage capables de fonctionner en mode automatique grâce à l'intégration d'un module électronique permettant de gérer les différentes phases du soudage. Un autre document de brevet US 6 858 822 décrit un procédé et un dispositif permettent d'effectuer une analyse de surface préalablement à l'autorisation d'une opération de soudage par électrofusion sur des tubes devant être grattés, pelés ou nettoyés de leurs contaminants de surface avant d'être jugés « aptes » pour un tel soudage par électrofusion. Le procédé et le dispositif utilisent des sondes sans contact, fixées aux câbles d'alimentation du système de soudage, de sorte que l'inspection soit effectuée automatiquement sur la section de tube concernée, juste avant l'activation de l'alimentation électrique des bobines de soudage chauffantes. Si la section de tube concernée échoue à l'inspection, l'équipement de soudage est désactivé jusqu'à ce que les sondes soient démontées, puis remontées pour une inspection ultérieure, de sorte que, pendant cet intervalle, l'opérateur puisse présumément corriger la situation, par exemple en regrattant ou en repelant la section de tube concernée.

Toutefois, de tels automates et les procédés mis en œuvre ne permettent pas de garantir un soudage de jonctions qui soit à la fois robuste et durable, tout au long de la vie de la canalisation, considérant qu'il est possible que certaines étapes présentent un défaut de qualité de soudage, notamment, au premier niveau, dû au grattage et au nettoyage des composants à souder. Les étapes de grattage et de nettoyage sont nécessaires pour éliminer une barrière chimique qui s'oppose à l'interdiffusion des macromolécules. De tels inconvénients impliquent des coûts importants de recherche des fuites, ainsi que des coûts d'excavation dans un premier temps. Ces coûts sont ensuite suivis par d'autres, tout aussi importants, relatifs aux réparations des fuites lorsque ces dernières ont été identifiées.

L'invention a notamment pour but de réduire drastiquement ces coûts ayant pour cause racine un mauvais soudage automatique des jonctions.

A cet effet, l'invention a pour objet un procédé de vérification avant soudage d'un tube en matière polymère et d'un accessoire en matière polymère qui comprend les étapes suivantes dans l'ordre suivant :
a) détermination de valeurs respectives relatives à la rugosité du tube et de l'accessoire,
b) si au moins une des conditions suivantes n'est pas remplie :
   - une condition prédéterminée entre la valeur relative à la rugosité du tube et un seuil de rugosité du tube,
   - une condition prédéterminée entre la valeur relative à la rugosité de l'accessoire et un seuil de rugosité de l'accessoire,
   des moyens automatisés empêchent de passer à l'étape c),
c) détermination de valeurs respectives relatives à la propreté du tube et de l'accessoire,
d) si au moins une des conditions suivantes n'est pas remplie :
   - une condition prédéterminée entre la valeur relative à la propreté du tube et un seuil de propreté du tube,
   - une condition prédéterminée entre la valeur relative à la propreté de l'accessoire et un seuil de propreté de l'accessoire,
   les moyens automatisés empêchent de passer à l'étape e), et
e) détermination de valeurs respectives relatives à une température du tube et de l'accessoire,
f) si au moins une des conditions suivantes n'est pas remplie :
   - une condition prédéterminée entre une valeur relative à une température du tube et une plage de températures,
   - une condition prédéterminée entre une valeur relative à une température de l'accessoire et la plage de températures,
   les moyens automatisés empêchent de passer à l'étape g),
g) montage de l'accessoire sur le tube.

Ainsi, le procédé de l'invention permet de vérifier l'état de surface de chacun des composants à souder en vue d'obtenir une canalisation issue d'un soudage d'un tube et d'un accessoire en matière polymère de meilleure qualité et qui réduira la nécessité d'interventions de réparation ultérieures causées par une soudure de mauvaise qualité entre ces deux composants. Le procédé de l'invention permet de contrôler l'état de surface des composants à souder préalablement à l'étape de soudage. Plus précisément, le procédé de l'invention permet de garantir son blocage à une étape déterminée grâce à l'utilisation de moyens automatisés, et ce, tant que l'ensemble des conditions prédéterminées justifiant un passage à l'étape suivante ne sont pas remplies. Ainsi, il n'est pas possible de forcer le passage à l'étape suivante. Par conséquent, le passage à une étape de soudage qui est ultérieure aux étapes du procédé de l'invention peut être empêché de manière sûre, ce qui permet de garantir la bonne qualité de la soudure finale.

Ainsi, le passage à l'étape de soudage est bloqué de manière indirecte, tant que chacun des états de surface des composants à souder ne remplit pas les prérequis nécessaires à une soudure de qualité, durable dans le temps.

L'étape f) de comparaison des valeurs relatives à une température du tube et à une température de l'accessoire permet de fournir une donnée supplémentaire en vue de la mise en œuvre d'une étape de soudage, ce qui participe à réaliser une soudure de qualité et durable dans le temps. Cette étape de comparaison a lieu après l'étape d) et donc uniquement dans le cas où les conditions prédéterminées des étapes b) et d) ont été remplies et que le passage à l'étape e) de détermination de valeurs respectives relatives à la température du tube et de l'accessoire a été autorisé et réalisé.

Ainsi, le soudage est prévenu par les moyens automatisés tant que le tube et l'accessoire ne présentent pas une température adéquate pour une soudure. Pour ce faire, les valeurs relatives à la température sont respectivement comparées à une plage de températures de référence pour la mise en œuvre de l'étape de soudage. Lorsque l'une de ces valeurs mesurées se trouve en dehors de la plage de températures, le passage à l'étape g) de montage est bloqué par les moyens automatisés qui peuvent même, dans certains cas extrêmes, informer qu'une température adéquate, du tube ou de l'accessoire, ne peut pas être atteinte en vue d'un soudage. La plage de températures est définie comme la plage au sein de laquelle les valeurs de températures du tube et de l'accessoire sont acceptables en vue de l'étape de soudage. Cette plage de températures peut évoluer en fonction de l'évolution des normes régissant les techniques de soudure de composants. De telles normes sont généralement spécifiques d'un pays. Par conséquent, la plage de températures peut être différente d'un pays à l'autre. A titre d'exemple, la plage de température en France peut être de - 5°C à + 35°C.

Les moyens automatisés peuvent être tout moyens permettant d'empêcher le passage à l'étape suivante. Par exemple, les moyens automatisés peuvent comprendre une tablette ou un ordinateur qui intègre un logiciel programmé pour empêcher le passage à l'étape suivante si l'une des conditions prédéterminées et nécessaires pour valider ce passage n'est pas remplie. Les moyens automatisés peuvent par exemple être programmés pour autoriser le déblocage des moyens permettant la réalisation de l'étape c) uniquement si les conditions prédéterminées de l'étape b) sont toutes les deux remplies.

Les composants de la canalisation à assembler peuvent correspondre à tout type de jonctions, soudables deux à deux, connues de l'homme du métier, sous condition que l'un des deux composants soit un tube. A titre d'exemple, ces composants peuvent être des tubes, des manchons ou encore des selles de branchement. Ainsi, le ou les seuils de rugosité et de propretés prédéterminées peuvent être spécifiques d'un ou plusieurs types de jonctions.

La matière polymère dans laquelle sont réalisés ces composants de canalisation peut être toute matière connue de l'homme du métier permettant le soudage de ces deux composants en vue de former un réseau de canalisations de gaz, notamment au moyen des technologies de soudage bout à bout ou par électro-fusion. Des matières polymères adaptées sont les matières thermoplastiques. Une matière polymère particulièrement adaptée est le polyéthylène (PE) ou les polyoléfines.

Avantageusement, le procédé comprend une étape de grattage du tube antérieure à l'étape a).

Avantageusement, l'étape a) comprend la réalisation d'une représentation de la rugosité du tube et de l'accessoire.

La représentation de la rugosité des composants à souder peut-être réalisée au regard des requis en termes de grattage des surfaces des composants à souder. Cette représentation peut être réalisée via des techniques connues comme la profilométrie laser. Ces techniques sont non destructrices et n'ont pas d'effet dommageable sur les composants et donc sur la canalisation dans sa globalité. Cette représentation peut revêtir la forme d'une représentation graphique en deux dimensions ou en trois dimensions, réalisée à partir de mesures de données afférentes à la rugosité des surfaces en question.

Cette représentation est ensuite analysée afin de déterminer une ou plusieurs valeurs représentatives de la rugosité de chaque composant. Ces valeurs peuvent être des paramètres afférents à la rugosité de ces surfaces, par exemple la rugosité totale (Rt), l'écart moyen (Ra), la rugosité moyenne, le pic maximal (Rp), le creux maximal (Rc), la période du sillon principal, la surface développée de la portion du composant à souder, l'anisotropie de structure, *etc.*

Ensuite, la ou les valeurs déterminées de rugosité du tube et la ou les valeurs déterminées de rugosité de l'accessoire sont comparées respectivement à un ou plusieurs seuils de rugosité du tube et un ou plusieurs seuils de rugosité de l'accessoire qui sont représentatifs d'une rugosité du tube et d'une rugosité de l'accessoire acceptables en vue d'un soudage. Si ces comparaisons révèlent que la rugosité du tube ou de l'accessoire ne sont pas conformes avec les critères nécessaires pour assurer une soudure durable dans le temps, le passage à l'étape c) est bloqué par les moyens automatisés.

Avantageusement, lorsque la condition prédéterminée entre la valeur relative à la rugosité du tube et le seuil de rugosité du tube n'est pas remplie, le tube est gratté sur une portion non préalablement grattée, puis on répète l'étape a), et lorsque la condition prédéterminée entre la valeur relative à la rugosité de l'accessoire et le seuil de rugosité de l'accessoire n'est pas remplie, on remplace l'accessoire, puis on répète l'étape a).

Le recours à une étape de grattage du tube sur une portion non préalablement grattée permet de conserver la possibilité de réaliser une soudure entre le tube et l'accessoire, sans devoir remplacer le tube, tout en contrôlant la rugosité de ce dernier pour qu'elle soit acceptable au vu des requis en termes de rugosité du tube pour assurer une bonne soudure finale.

Avantageusement, l'étape c) comprend la réalisation d'une représentation de la propreté du tube et de l'accessoire.

La représentation de la propreté des composants à souder peut-être réalisée au regard des requis en termes de nettoyage des surfaces des composants à souder. Cette représentation peut être réalisée via des techniques connues comme la fluorescence UV, la spectrométrie infrarouge ou encore la diffusion de lumière. Ces techniques sont non destructrices et n'ont pas d'effet dommageable sur les composants et donc sur la canalisation dans sa globalité. Cette représentation peut revêtir la forme d'une représentation graphique en deux dimensions ou en trois dimensions, réalisée à partir de mesures de données afférentes à la propreté des surfaces en question.

Cette représentation est ensuite analysée afin de déterminer une ou plusieurs valeurs représentatives de la propreté de chaque composant. De telles valeurs peuvent être des paramètres afférents au niveau de pollution de l'état de surface par exemple.

Ensuite, la ou les valeurs déterminées de propreté du tube et la ou les valeurs déterminées de propreté de l'accessoire sont comparés respectivement à un ou plusieurs seuils de propreté du tube et un ou plusieurs seuils de propreté de l'accessoire qui sont représentatifs d'une propreté du tube et d'une propreté de l'accessoire acceptables en vue d'un soudage. Si ces comparaisons révèlent que la propreté du tube ou de l'accessoire ne sont pas conformes avec les requis en termes de propreté pour assurer une soudure durable dans le temps, le passage à l'étape e) de comparaisons des valeurs relatives à la température des composants est bloqué par les moyens automatisés.

Avantageusement, lorsque la condition prédéterminée entre la valeur relative à la propreté du tube et le seuil de propreté du tube n'est pas remplie, une étape de nettoyage du tube est réalisée, puis on répète l'étape c), et lorsque la condition prédéterminée entre la valeur relative à la propreté de l'accessoire et le seuil de propreté de l'accessoire n'est pas remplie, une étape de nettoyage de l'accessoire est réalisée, puis on répète l'étape c).

Le recours à une étape de nettoyage du tube ou à une étape de nettoyage de l'accessoire permet d'augmenter la qualité de la propreté des surfaces des composants à souder, lorsque ces derniers ne présentent pas chacun une propreté acceptable en vue d'une soudure acceptable.

Avantageusement, au moins l'une des conditions prédéterminées de l'étape b) est que la valeur relative à la rugosité du tube ou la valeur relative à la rugosité de l'accessoire est inférieure, respectivement, au seuil de rugosité du tube ou au seuil de rugosité de l'accessoire, ou bien au moins l'une des conditions prédéterminées de l'étape b) est que la valeur relative à la rugosité du tube ou la valeur relative à la rugosité de l'accessoire est supérieure, respectivement, au seuil de rugosité du tube ou au seuil de rugosité de l'accessoire.

Avantageusement, le seuil de rugosité du tube est un premier seuil de rugosité du tube, les moyens automatisés empêchent le passage à l'étape c) si la valeur relative à la rugosité du tube n'est pas comprise dans une plage formée par le premier seuil de rugosité du tube et un deuxième seuil de rugosité du tube, différent du premier seuil de rugosité du tube.

Avantageusement, le seuil de rugosité de l'accessoire est un premier seuil de rugosité de l'accessoire, les moyens automatisés empêchent le passage à l'étape c) si la valeur relative à la rugosité de l'accessoire n'est pas comprise dans une plage formée par le premier seuil de rugosité de l'accessoire et un deuxième seuil de rugosité de l'accessoire, différent du premier seuil de rugosité de l'accessoire.

Avantageusement, au moins l'une des conditions prédéterminées de l'étape d) est que la valeur relative à la propreté du tube ou la valeur relative à la propreté de l'accessoire est inférieure, respectivement, au seuil de propreté du tube ou au seuil de propreté de l'accessoire, ou bien au moins l'une des conditions prédéterminées de l'étape d) est que la valeur relative à la propreté du tube ou la valeur relative à la propreté de l'accessoire est supérieure, respectivement, au seuil de propreté du tube ou au seuil de propreté de l'accessoire.

Avantageusement, le seuil de propreté du tube est un premier seuil de propreté du tube, les moyens automatisés empêchent le passage à l'étape e) si la valeur relative à la propreté du tube n'est pas comprise dans une plage formée par le premier seuil de propreté du tube et un deuxième seuil de propreté du tube, différent du premier seuil de propreté du tube.

Avantageusement, le seuil de propreté de l'accessoire est un premier seuil de propreté de l'accessoire, les moyens automatisés empêchent le passage à l'étape e) si la valeur relative à la propreté de l'accessoire n'est pas comprise dans une plage formée par le premier seuil de propreté de l'accessoire et un deuxième seuil de propreté de l'accessoire, différent du premier seuil de propreté de l'accessoire.

Avantageusement, le procédé comprend en outre une étape de détermination d'une quantité d'énergie requise pour un soudage en fonction de la valeur relative à une température du tube et de la valeur relative à une température de l'accessoire.

Ainsi, les valeurs relatives à une température du tube et de l'accessoire prises en compte pour l'étape de comparaison e) permettent de déterminer la quantité d'énergie délivrée par l'automate de soudage. Cette quantité d'énergie est corrigée par rapport à une quantité de référence, en fonction des valeurs mesurées relatives à la température du tube et de l'accessoire. Ainsi, l'énergie appliquée correspond à l'énergie optimale pour cette soudure, ce qui assure sa pérennité.

Avantageusement, le procédé est automatisé.

Ainsi, le procédé peut être mis en œuvre par exemple au moyen d'un ensemble de commande (un automate) apte à exécuter l'ensemble des étapes du procédé de vérification. Une telle automatisation permet d'augmenter la cadence de vérification des composants à souder et de lancer automatiquement toutes les étapes du procédé de vérification de l'invention.

L'invention a également pour objet un procédé de soudage d'un tube en matière polymère et d'un accessoire en matière polymère pour former une canalisation de gaz.

L'invention a également pour objet un programme comprenant des instructions de code aptes à commander la mise en œuvre d'un procédé de l'invention lorsqu'il est exécuté sur un ordinateur.

L'invention a également pour objet un support d'enregistrement comprenant un programme selon l'invention sous forme enregistrée.

L'invention a également pour objet un dispositif de vérification avant soudage d'un tube en matière polymère et d'un accessoire en matière polymère, caractérisé en ce qu'il comprend
- des premiers moyens agencés pour déterminer des valeurs respectives relatives à la rugosité du tube et de l'accessoire,
- des deuxièmes moyens agencés pour déterminer des valeurs respectives relatives à la propreté du tube et de l'accessoire,
- des moyens automatisés agencés pour empêcher l'utilisation des deuxièmes moyens si une condition prédéterminée entre la valeur relative à la rugosité du tube et un seuil de rugosité du tube n'est pas remplie ou si une condition prédéterminée entre la valeur relative à la rugosité de l'accessoire et un seuil de rugosité de l'accessoire n'est pas remplie,
- des troisièmes moyens agencés pour mesurer des valeurs relatives à la température du tube et de l'accessoire,
- les moyens automatisés étant agencés pour empêcher l'utilisation des troisièmes moyens si une condition prédéterminée entre la valeur relative à la propreté du tube et un seuil de propreté du tube n'est pas remplie, ou si une condition prédéterminée entre la valeur relative à la propreté de l'accessoire et un seuil de propreté de l'accessoire n'est pas remplie,
- des moyens de montage de l'accessoire sur le tube,
- les moyens automatisés étant agencés pour empêcher l'utilisation des moyens de montage si une condition prédéterminée entre la valeur relative à la température du tube et une plage de températures n'est pas remplie, ou si une condition prédéterminée entre la valeur relative à la température de l'accessoire et la plage de températures n'est pas remplie.

### Brève description des figures

Nous allons maintenant présenter plusieurs modes de réalisation de l'invention uniquement à titre d'exemples et en se référant aux dessins annexés dans lesquels :
[Fig.1] la figure 1 est un schéma illustrant des éléments d'un dispositif de vérification avant soudage d'un tube en matière polymère et d'un accessoire en matière polymère selon un premier mode de réalisation et un deuxième mode de réalisation,
[Fig.2] la figure 2 est un schéma illustrant des éléments d'un dispositif de vérification avant soudage d'un tube en matière polymère et d'un accessoire en matière polymère selon un troisième mode de réalisation et un quatrième mode de réalisation,
[Fig.3] la figure 3 est un logigramme représentant différentes étapes du procédé de vérification selon un premier mode de mise en œuvre,
[Fig.4] la figure 4 est un logigramme représentant différentes étapes du procédé selon un deuxième mode de mise en œuvre, et
[Fig.5] la figure 5 est un logigramme représentant différentes étapes du procédé de soudage de l'invention selon un premier mode de mise en œuvre,
[Fig.6] la figure 6 est un exemple de représentation de l'état de surface d'un composant.

### Description détaillée

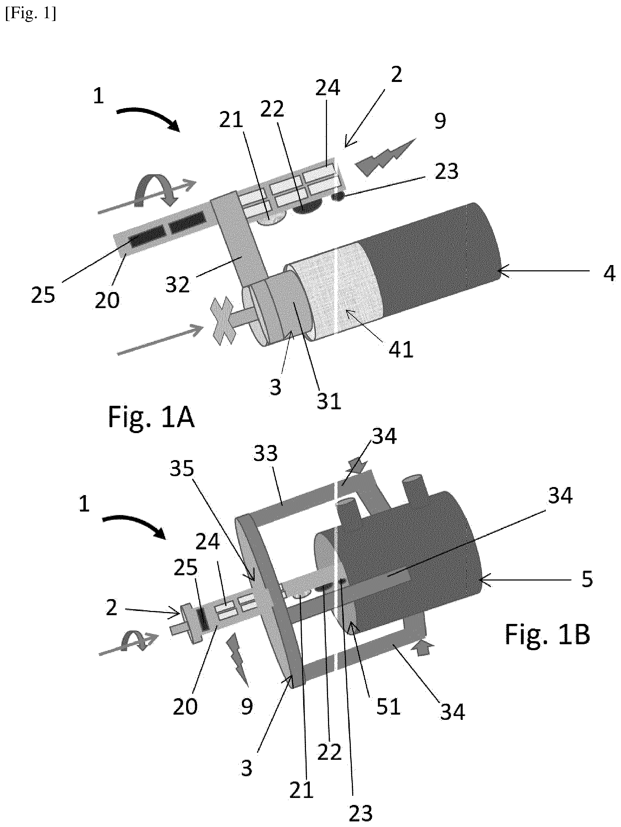

On a représenté sur les figures 1A à 2B, des éléments de dispositifs de vérification avant soudage 1 d'un tube 4 en matière polymère et d'un accessoire 5 ou 6 en matière polymère, selon quatre modes de réalisation différents.

Dans tous ces différents modes de réalisation, le dispositif de vérification avant soudage 1 comprend un organe de mesure 2 et un support 3 pour l'organe de mesure 2 comprenant des moyens d'assemblage au composant 4, 5 ou 6. Ces composants 4, 5 ou 6 ont une forme profilée cylindrique tubulaire à section circulaire.

L'organe de mesure 2 comprend un corps principal 20, un capteur du type à profilométrie laser 21, un capteur du type à fluorescence UV 22, un thermomètre infrarouge 23, des transmetteurs 24 et au moins une source d'énergie 25 sans fil qui alimente en énergie les quatre types d'éléments précités.

Le corps principal 20 peut se présenter sous forme d'une barrette, ce qui permet d'agencer les différents éléments de l'organe de mesure 2 facilement.

Comme illustré à la figure 1A, le dispositif de vérification avant soudage 1 permet notamment de mesurer des données relatives à l'état de surface (rugosité et propreté) d'une portion externe 41 d'un tube creux 4, dont l'extrémité est destinée à être soudée dans la demi-emboîture du manchon 5 de la figure 1B. Le support 3 comprend en ce sens une virole 31 apte à être positionnée dans le tube 4 et un bras 32 qui s'étend depuis la virole 31 et qui permet de déporter l'organe de mesure 2 par rapport à la portion 41 du tube 4. Pour la réalisation des mesures, le corps principal 20 est apte à être mu en translation par rapport au tube 4, suivant une direction parallèle à l'axe longitudinal du tube 4. Le corps principal 20 est également apte à être mu en rotation par rapport au tube 4, autour de cet axe longitudinal. Ainsi, le capteur du type à profilométrie laser 21 et le capteur du type à fluorescence UV 22 peuvent balayer la totalité de la portion 41 du tube 4. Ces deux capteurs permettent de fournir des données relatives à l'état de surface (rugosité et propreté) de la portion 41 du tube 4. Ces données sont transmises à une unité d'acquisition de données 9 au moyen des transmetteurs 24. L'unité d'acquisition de données 9 est apte à traiter et analyser les données qu'elle reçoit.

Afin de vérifier l'état de surface de la portion interne 51 du manchon 5, le support 3 du dispositif 1 selon un deuxième mode de réalisation comprend un bâti de serrage 33. Ce bâti de serrage 33 comprend des pattes 34 qui exercent chacune une force de compression sur la surface externe du manchon 5, permettant ainsi de maintenir le support 3 dans une position immobile par rapport au manchon 5. Le support 3 comprend également une partie centrale 35 dans laquelle est ménagée une ouverture (non représentée). Cette ouverture permet de positionner au moins partiellement l'organe de mesure 2 dans la demi-emboîture du manchon 5. A travers cette ouverture, le corps principal 20 de l'organe de mesure 2 peut être mu selon un mouvement de translation par rapport au manchon 5, suivant une direction parallèle à l'axe longitudinal du manchon 5. Ainsi, l'organe de mesure 2 peut être introduit plus en profondeur au sein du manchon 5. Le corps principal 20 peut également être mu selon un mouvement de rotation par rapport au manchon 5, autour de cet axe longitudinal. Cette combinaison de mouvements longitudinaux et de rotation permet au capteur du type à profilométrie laser 21 et au capteur du type à fluorescence UV 22 de balayer la totalité de la portion interne 51 du manchon 5. En mesurant l'état de surface interne du manchon 5, il est notamment possible de déterminer des anomalies présentes sur la nappe chauffante (ex : fils déplacés, cavités, *etc.*)*.*

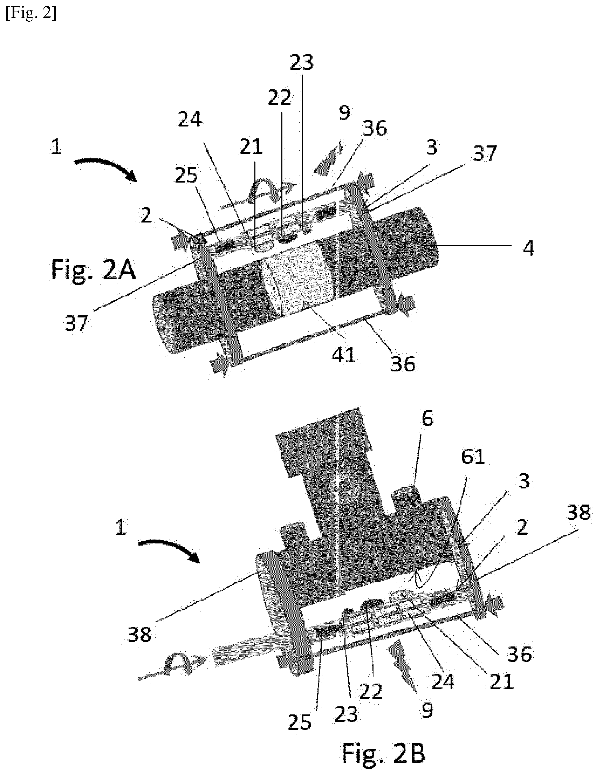

Un troisième mode de réalisation est illustré à la figure 2A et permet de vérifier l'état de surface d'une portion 41 d'un tube 4, destinée à être soudée avec une portion (non visible) d'une selle de branchement 6.

Pour ce faire, le support 3 comprend deux cerclages 37 formant des logements circulaires et aptes à encercler le tube 4. Ces deux cerclages 37 sont reliés l'un à l'autre au moyen de deux tiges de serrage 36 qui permettent de maintenir l'ensemble du support 3 et de le solidariser au tube 4. Les deux logements circulaires 37 présentent chacun une ouverture (non représentée) permettant de disposer l'organe de mesure 2 dans une position déportée par rapport à la portion 41 du tube 4 et en regard de cette portion. A l'instar des deux premiers modes de réalisation présentés, le corps principal 20 de l'organe de mesure 2 peut être mu en translation et en rotation de manière à ce que le capteur du type à profilométrie laser 21 et le capteur du type à fluorescence UV 22 puissent balayer l'ensemble de la portion 41 du tube 4.

La selle de branchement 6 destinée à être soudée avec le tube 4 illustré à la figure 2B est un composant creux, en forme de demi-cylindre. Afin de vérifier l'état de surface de la portion interne 61 de la selle de branchement 6, le support 3 du dispositif de vérification 1 selon le quatrième mode de réalisation comprend deux éléments de contact 38. Ces éléments de contact 38 sont aptes à être positionnés chacun sur une des extrémités de la selle de branchement 6. Ils sont reliés l'un à l'autre au moyen d'une tige de serrage 36 qui permet de solidariser l'ensemble du support 3 et de le maintenir dans une position immobile par rapport à la selle de branchement 6. Les deux éléments de contact 38 présentent chacun une ouverture (non représentée) permettant de disposer l'organe de mesure 2 dans une position déportée par rapport à la surface intérieure de la selle de branchement 6. Comme pour les modes de réalisation précédents, le corps principal 20 de l'organe de mesure 2 peut être mu en translation et en rotation de manière à ce que le capteur du type à profilométrie laser 21 et le capteur du type à fluorescence UV 22 puissent balayer l'ensemble de la portion à souder de la selle de branchement 6. En mesurant l'état de surface interne de la selle de branchement 6, il est notamment possible de déterminer des anomalies présentes sur la nappe chauffante (ex : fils déplacés, cavités, *etc.*)*.*

Le dispositif 1 comprend des moyens automatisés en vue de mettre en œuvre le procédé de vérification de l'invention. Ces moyens automatisés intègrent l'unité d'acquisition de données à laquelle sont transmises les données mesurées par les différents capteurs du dispositif 1. Le dispositif de vérification avant soudage 1 peut être un automate permettant une mise en œuvre automatisée du procédé de vérification.

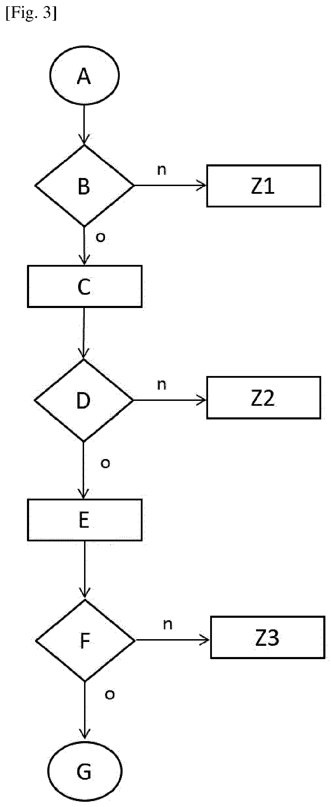

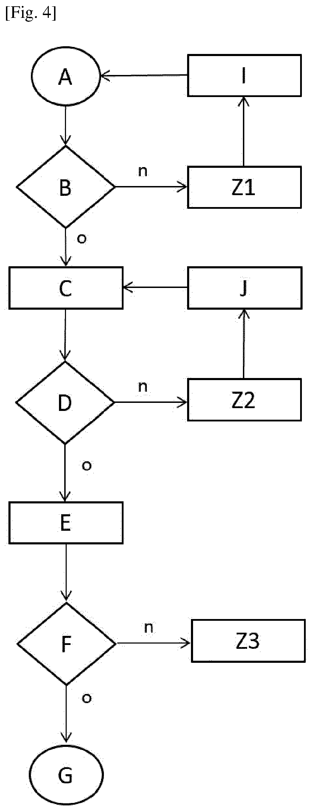

On a représenté sur les figures 3 et 4 deux modes de mise en œuvre d'un procédé de vérification avant soudage d'un tube 4 en matière polymère et d'un accessoire 5 ou 6 en matière polymère.

Le procédé de vérification de l'invention selon le premier mode de mise en œuvre (figure 3), débute par une première étape A de détermination de valeurs respectives relatives à la rugosité du tube 4 et de l'accessoire 5 ou 6 à souder, ici dans le but de former une canalisation de gaz. Un tel procédé est également adapté à la vérification avant soudage d'une canalisation destinée à recevoir des types de contenants autres que du gaz et dont le transport est compatible avec la matière polymère du tube 4 et de l'accessoire 5 ou 6. Un tel contenant peut par exemple être un fluide, tel que l'eau.

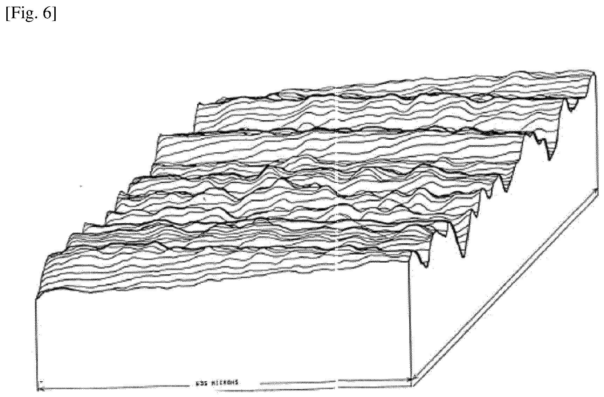

Dans le mode de mise en œuvre illustré à la figure 3, l'étape A comprend la réalisation d'une représentation de la rugosité du tube 4 et de l'accessoire 5 ou 6. Cette étape de réalisation est mise en œuvre au moyen d'un ou plusieurs capteurs (par exemple un ou plusieurs rugosimètres laser 21 du dispositif 1) réalisant des mesures de données relatives à la rugosité du tube 4 et de l'accessoire 5 ou 6 à souder. Ensuite, les données mesurées sont traitées informatiquement via une unité d'acquisition de données 9 intégrée dans les moyens automatisés, ce qui permet de réaliser ladite représentation dont un exemple de représentation graphique en trois dimensions est illustré à la figure 6.

Après la réalisation de la représentation de la rugosité du tube 4 et de l'accessoire 5 ou 6, cette dernière est analysée afin de déterminer les valeurs respectives relatives à la rugosité du tube 4 et de l'accessoire 5 ou 6. De telles valeurs peuvent être issues de la liste suivante non exhaustive : la rugosité totale (Rt), l'écart moyen (Ra), la rugosité moyenne, le pic maximal (Rp), le creux maximal (Rc), la période du sillon principal, la surface développée de la portion du composant à souder, l'anisotropie de structure, la striation dans le sens du grattage.

Cette première étape A est suivie d'une étape B de comparaison lors de laquelle les valeurs respectives relatives à la rugosité du tube 4 et de l'accessoire 5 ou 6 sont comparées respectivement à un seuil de rugosité du tube 4 et un seuil de rugosité de l'accessoire. Cela permet de déterminer si une condition prédéterminée entre la valeur relative à la rugosité du tube 4 et un seuil de rugosité du tube 4 et si une condition prédéterminée entre la valeur relative à la rugosité de l'accessoire 5 ou 6 et un seuil de rugosité de l'accessoire 5 ou 6 sont remplies. Si tel est le cas, le passage à l'étape C est autorisé par les moyens automatisés. Cependant, si au moins l'une des deux conditions de l'étape B n'est pas remplie, alors ces moyens automatisés empêchent de passer à l'étape C (étape Z1). Il n'est pas possible pour un opérateur manuel de contourner le blocage du procédé par les moyens automatisés. Ces derniers peuvent comprendre une tablette, un ordinateur ou un smartphone qui intègre un logiciel programmé pour empêcher le passage à l'étape C si l'une des conditions prédéterminées et nécessaires pour valider ce passage n'est pas remplie. Les moyens automatisés peuvent par exemple être programmés pour autoriser le déblocage des moyens permettant la réalisation de l'étape C uniquement si les conditions prédéterminées de l'étape B sont toutes les deux remplies.

L'étape C est une étape de détermination de valeurs respectives relatives à la propreté du tube 4 et de l'accessoire.

Selon ce premier mode de mise en œuvre, l'étape C comprend une étape de réalisation d'une représentation de la propreté du tube 4 et de l'accessoire. Une telle étape peut être mise en œuvre au moyen d'un ou plusieurs capteurs du type à fluorescence UV 21 du dispositif 1 réalisant des mesures de données relatives à la propreté de la surface du tube 4 et de l'accessoire 5 ou 6 à souder. En remplacement ou en complément des capteurs du type à fluorescence UV 21, le dispositif 1 peut également comprendre un ou plusieurs spectromètres infrarouges permettant également de mesurer des données relatives à la propreté de la surface du tube 4 et de l'accessoire 5 ou 6 à souder. Ensuite les données mesurées sont traitées informatiquement via l'unité d'acquisition de données 9, ce qui permet de réaliser ladite représentation.

Après la réalisation de la représentation de la propreté du tube 4 et de l'accessoire 5 ou 6, cette dernière est analysée afin de déterminer les valeurs respectives relatives à la propreté du tube 4 et de l'accessoire 5 ou 6. De telles valeurs peuvent être relatives au niveau de pollution de l'état de surface, tel que la quantité de graisse ou la quantité de poussière.

L'étape C est suivie d'une étape D de comparaison lors de laquelle les valeurs respectives relatives à la propreté du tube 4 et de l'accessoire 5 ou 6 sont comparées respectivement à un seuil de propreté du tube 4 et un seuil de propreté de l'accessoire 5 ou 6. Cela permet de contrôler si une condition prédéterminée entre la valeur relative à la propreté du tube 4 et un seuil de propreté du tube 4 et si une condition prédéterminée entre la valeur relative à la propreté de l'accessoire 5 ou 6 et un seuil de propreté de l'accessoire 5 ou 6 sont remplies. Si tel est le cas, le passage à l'étape E de mesure de valeurs relatives à la température du tube 4 et de l'accessoire 5 ou 6 est autorisé par les moyens automatisés. Une telle mesure de la température est réalisée au moyen du thermomètre infrarouge 23 de l'organe de mesure 2 du dispositif 1.

Cependant, si au moins l'une des deux conditions de l'étape D n'est pas remplie, alors les moyens automatisés empêchent de passer à l'étape E (étape Z2). Là encore, il n'est pas possible pour un opérateur de contourner manuellement le blocage du procédé par les moyens automatisés. Le blocage du procédé à ce niveau du procédé peut prendre différentes formes. Par exemple, les moyens automatisés peuvent interdire le déblocage des moyens du dispositif 1 permettant de réaliser la mesure des valeurs de température du tube 4 et de l'accessoire 5 ou 6. Ainsi, il est impossible de contourner ce blocage par les moyens automatisés.

L'étape E est suivie d'une étape F de comparaison lors de laquelle les valeurs respectives relatives à la température du tube 4 et de l'accessoire 5 ou 6 sont comparées à une plage de températures. Si les valeurs mesurées relatives à la température du tube 4 et de l'accessoire 5 ou 6 se situent en dehors de la plage de températures, les moyens automatisés empêchent de passer à l'étape F de montage de l'accessoire 5 ou 6 sur le tube 4 (étape Z3). A l'inverse, si ces valeurs relatives à la température se situent dans la plage de températures, le passage à l'étape G de montage de l'accessoire 5 ou 6 sur le tube 4 est autorisé par les moyens automatisés et un opérateur procède au montage de l'accessoire 5 ou 6 sur le tube 4 grâce aux moyens de montage (non représentés) du dispositif de vérification 1

Lorsque toutes les conditions prédéterminées des étapes B, D et F sont remplies et que l'étape G de montage a été réalisée via des moyens de montage (non représentés) ou manuellement, le procédé de vérification selon ce premier mode de mise en œuvre est terminé et le tube 4 et l'accessoire 5 ou 6 peuvent donc être soudés l'un avec l'autre.

Le procédé selon le second mode de mise en œuvre de l'invention partage les étapes du procédé selon le premier mode de mise en œuvre. Il comprend en outre une étape I de grattage d'une portion non préalable grattée du tube 4 et/ou de remplacement de l'accessoire 5 ou 6 qui sont mises en œuvre après que les moyens automatisés aient empêchés le passage à l'étape C (étape Z1). L'alternative de l'étape I selon laquelle le tube 4 est gratté sur une portion non préalablement grattée est mise en œuvre dans le cas où la condition prédéterminée entre la valeur relative à la rugosité du tube 4 et un seuil de rugosité du tube 4 n'est pas remplie. Ensuite l'étape A est répétée afin de déterminer si la rugosité de la portion du tube 4 nouvellement grattée présente les requis nécessaires en termes de grattage pour permettre une soudure de qualité durable dans le temps. Si tel n'est toujours pas le cas, les moyens automatisés empêchent à nouveau le passage à l'étape C (étape Z1) et la boucle de vérification est répétée. Ainsi, il est possible de garantir de manière efficace que le tube 4 présente une rugosité adéquate pour une soudure de qualité, et ce, sans devoir remplacer le tube 4, ce qui représente une manipulation complexe et onéreuse.

L'alternative de l'étape I selon laquelle l'accessoire 5 ou 6 est remplacé est mise en œuvre dans le cas où la condition prédéterminée entre la valeur relative à la rugosité de l'accessoire 5 ou 6 et un seuil de rugosité de l'accessoire 5 ou 6 n'est pas remplie. Dans ce cas, l'accessoire 5 ou 6 est remplacé et les étapes A et B sont répétées. Comme précédemment, si cette condition n'est toujours pas remplie lors de la nouvelle étape B, les moyens automatisés empêchent à nouveau le passage à l'étape C (étape Z1) et la boucle de vérification est répétée.

Le procédé selon le second mode de mise en œuvre comprend également une deuxième boucle de vérification comprenant les étapes C, D Z2 et J. En effet, lorsque les moyens automatisés bloquent le passage à l'étape E, une étape J est mise en œuvre. L'étape J comprend un nettoyage de la surface du tube 4 et/ou de la surface de l'accessoire 5 ou 6 en fonction de la condition prédéterminée de l'étape D qui n'est pas remplie. A l'instar de la première boucle de vérification, l'étape C est mise en œuvre à nouveau dès la fin de l'étape J, puis l'étape D de comparaison est mise en œuvre à son tour. Dans le cas où l'une au moins des conditions prédéterminées n'est toujours pas remplie, les moyens automatisés bloquent le passage à l'étape E de mesure de valeurs relatives à la température du tube 4 et de l'accessoire 5, 6 et la seconde boucle de vérification est de nouveau mise en œuvre.

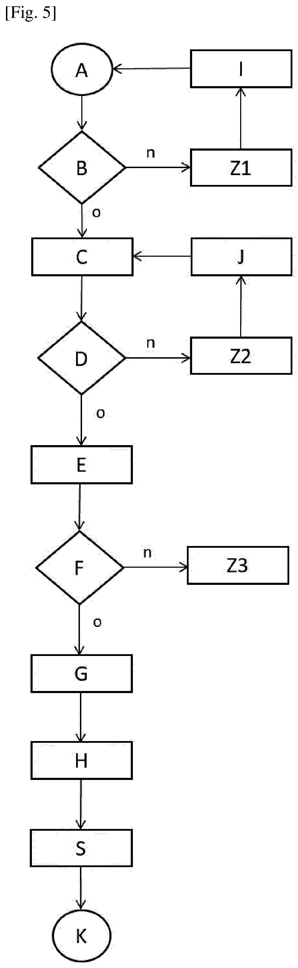

On a représenté à la figure 5, un mode de mise en œuvre d'un procédé de soudage d'un tube 4 en matière polymère et d'un accessoire 5 ou 6 en matière polymère pour former une canalisation de gaz, dans lequel on met en œuvre le procédé de vérification selon le deuxième mode de mise en œuvre.

Ce procédé de soudage reprend toutes les étapes décrites dans le cadre de la description du procédé de vérification selon le deuxième mode de mise en œuvre.

Dans une variante non représentée du procédé de soudage de l'invention, une troisième boucle de vérification est réalisée entre les étapes E, F et Z3. Plus précisément, une seconde étape de mesure E est mise en œuvre après l'étape Z3 afin de déterminer une nouvelle mesure relative à la température du tube 4 et de l'accessoire 5 ou 6. Cette seconde étape de mesure est mise en œuvre après un certain temps, afin de permettre à la température du tube 4 et de l'accessoire 5 ou 6 d'évoluer vers la température ambiante. Ensuite l'étape F est mise en œuvre à nouveau et si l'une des secondes valeurs mesurées relatives à la température du tube 4 et de l'accessoire 5 ou 6 se situent encore en dehors de la plage de températures, les moyens automatisés empêchent à nouveau le passage à l'étape G. De plus, s'il s'avère que l'une des valeurs mesurées relatives à la température du tube 4 et de l'accessoire 5 ou 6 est trop éloignée de l'une des bornes de la plage de températures, de telle sorte que le tube 4 ou l'accessoire 5 ou 6 ne peut pas atteindre une température acceptable en vue d'une étape de soudage, alors le procédé peut être arrêté par les moyens automatisés.

Lorsque le résultat de l'étape F de comparaison des valeurs mesurées relatives à la température à l'étape E est positif, c'est-à-dire que ces valeurs mesurées sont comprises dans la plage de températures, les moyens automatisés autorisent le passage à l'étape G du procédé.

A l'étape H, on détermine la quantité d'énergie à fournir à l'automate de soudage pour le soudage entre le tube 4 et l'accessoire 5 ou 6, et ce, en fonction des valeurs de température mesurées à l'étape E. En fonction de ces valeurs de température mesurées, le temps et la puissance de chauffage sont adaptés par l'automate pour assurer un assemblage durable dans le temps. Cet assemblage est réalisé lors de la mise en œuvre de l'étape de soudage S.

Après la réalisation de l'étape de soudage (étape S), une étape d'élaboration d'un procès-verbal (étape K) est réalisée afin de délivrer un procès-verbal de soudage et de traçabilité des composants soudés ayant pour finalité de répertorier les deux composants soudés et les conditions de soudage.

Le procédé de soudage de l'invention peut également comprendre des étapes de grattage du tube 4 préalables à l'étape A. Ces étapes de grattage préalables ont pour but de préparer la surface du tube 4 en vue de l'étape de soudure au regard des requis de grattage du tube 4. Ce procédé peut également comprendre des étapes de nettoyage du tube 4 et de l'accessoire 5 ou 6 préalables à l'étape C. Ces étapes de nettoyage préalables ont pour but de préparer la surface de ces composants en vue de l'étape de soudure au regard des requis de propreté de chacun de ces composants.

Les moyens automatisés du dispositif sont agencés pour assister l'opérateur lors de la mise en œuvre de l'un, au moins, des procédés tels que nous venons de les présenter. Ils sont notamment programmés pour permettre le passage à telle ou telle étape suivante comme indiqué, ou au contraire l'empêcher si la condition prévue à cette fin n'est pas remplie. On peut prévoir que ces moyens commandent tout ou partie des étapes du procédé de l'invention. A cette fin, le dispositif comprend sur un support d'enregistrement un programme d'ordinateur comprenant des instructions de code aptes à commander ces étapes lorsqu'il est exécuté sur le dispositif.

Les étapes G et H du mode de mise en œuvre du procédé de soudage de la figure 5 peuvent être mises en œuvre selon un ordre inverse de celui décrit précédemment. Ces deux étapes peuvent également être mises en œuvre de manière concomitante.

### Liste des références

1 : dispositif de mesure
2 : organe de mesure
3 : support pour l'organe de mesure
4 : tube en matière polymère
5 : manchon en matière polymère
6 : selle de branchement en matière polymère
9 : unité d'acquisition de données
20 : corps principal
21 : capteur du type à profilométrie laser
22 : capteur du type à fluorescence UV
23 : thermomètre infrarouge
24 : transmetteur
25 : source d'énergie
31 : virole
32 : bras
33 : bâti de serrage
34 : pattes de serrage
35 : partie centrale
36 : tige de serrage
37 : cerclage
38 : élément de contact
41 : portion de la surface à souder du tube
51 : portion de la surface à souder du manchon
61 : portion de la surface à souder de la selle
étape A : détermination de valeurs respectives relatives à la rugosité du tube et de l'accessoire
étape B : comparaisons liées à la rugosité du tube et de l'accessoire
étape C : détermination de valeurs respectives relatives à la propreté du tube et de l'accessoire
étape D : comparaisons liées à la propreté du tube et de l'accessoire
étape E : mesure de valeurs respectives relatives à la température du tube et de l'accessoire
étape F : comparaisons liées aux valeurs de température du tube et de l'accessoire
étape G : montage de l'accessoire sur le tube
étape H : détermination d'une quantité d'énergie requise pour le soudage
étape I : grattage d'une portion non préalable grattée du tube et/ou remplacement de l'accessoire
étape J : nettoyage de la surface du tube et/ou de la surface de l'accessoire
étape K : émission d'un PV de soudage et de traçabilité
étape S : soudage
étape Z1, Z2, Z3 : blocage du procédé par les moyens automatisés

## Revendications

1. Procédé de vérification avant soudage d'un tube (4) en matière polymère et d'un accessoire (5, 6) en matière polymère, **caractérisé en ce qu'**il comprend les étapes suivantes dans l'ordre suivant :
a) détermination de valeurs respectives relatives à la rugosité du tube (4) et de l'accessoire (5, 6),
b) si au moins une des conditions suivantes n'est pas remplie :
- une condition prédéterminée entre la valeur relative à la rugosité du tube (4) et un seuil de rugosité du tube (4),
- une condition prédéterminée entre la valeur relative à la rugosité de l'accessoire (5, 6) et un seuil de rugosité de l'accessoire (5, 6), des moyens automatisés empêchent de passer à l'étape c),
c) détermination de valeurs respectives relatives à la propreté du tube (4) et de l'accessoire (5, 6),
d) si au moins une des conditions suivantes n'est pas remplie :
- une condition prédéterminée entre la valeur relative à la propreté du tube (4) et un seuil de propreté du tube (4),
- une condition prédéterminée entre la valeur relative à la propreté de l'accessoire (5, 6) et un seuil de propreté de l'accessoire (5, 6), les moyens automatisés empêchent de passer à l'étape e), et
e) détermination de valeurs respectives relatives à une température du tube (4) et de l'accessoire (5, 6),
f) si au moins une des conditions suivantes n'est pas remplie :
- une condition prédéterminée entre la valeur relative à une température du tube (4) et une plage de températures,
- une condition prédéterminée entre la valeur relative à une température de l'accessoire (5, 6) et la plage de températures,
les moyens automatisés empêchent de passer à l'étape g),
g) montage de l'accessoire (5, 6) sur le tube (4).

2. Procédé selon la revendication 1, comprenant une étape de grattage du tube (4) antérieure à l'étape a).

3. Procédé selon la revendication 1 ou 2, dans lequel l'étape a) comprend la réalisation d'une représentation de la rugosité du tube (4) et de l'accessoire (5, 6).

4. Procédé selon l'une quelconque des revendications précédentes, dans lequel :
- lorsque la condition prédéterminée entre la valeur relative à la rugosité du tube (4) et le seuil de rugosité du tube (4) n'est pas remplie, le tube (4) est gratté sur une portion non préalablement grattée, puis on répète l'étape a), et
- lorsque la condition prédéterminée entre la valeur relative à la rugosité de l'accessoire (5, 6) et le seuil de rugosité de l'accessoire (5, 6) n'est pas remplie, on remplace l'accessoire (5, 6), puis on répète l'étape a).

5. Procédé selon l'une quelconque des revendications précédentes, dans lequel l'étape c) comprend la réalisation d'une représentation de la propreté du tube (4) et de l'accessoire (5, 6).

6. Procédé selon l'une quelconque des revendications précédentes, dans lequel :
- lorsque la condition prédéterminée entre la valeur relative à la propreté du tube (4) et le seuil de propreté du tube n'est pas remplie, une étape de nettoyage du tube (4) est réalisée, puis on répète l'étape c), et
- lorsque la condition prédéterminée entre la valeur relative à la propreté de l'accessoire (5, 6) et le seuil de propreté de l'accessoire (5, 6) n'est pas remplie, une étape de nettoyage de l'accessoire (5, 6) est réalisée, puis on répète l'étape c).

7. Procédé selon l'une quelconque des revendications précédentes, dans lequel au moins l'une des conditions prédéterminées de l'étape b) est que la valeur relative à la rugosité du tube (4) ou la valeur relative à la rugosité de l'accessoire (5, 6) est inférieure, respectivement, au seuil de rugosité du tube (4) ou au seuil de rugosité de l'accessoire (5, 6), ou bien au moins l'une des conditions prédéterminées de l'étape b) est que la valeur relative à la rugosité du tube (4) ou la valeur relative à la rugosité de l'accessoire (5, 6) est supérieure, respectivement, au seuil de rugosité du tube (4) ou au seuil de rugosité de l'accessoire (5, 6).

8. Procédé selon l'une quelconque des revendications précédentes, dans lequel le seuil de rugosité du tube (4) étant un premier seuil de rugosité du tube (4), les moyens automatisés empêchent le passage à l'étape c) si la valeur relative à la rugosité du tube (4) n'est pas comprise dans une plage formée par le premier seuil de rugosité du tube (4) et un deuxième seuil de rugosité du tube (4), différent du premier seuil de rugosité du tube (4).

9. Procédé selon l'une quelconque des revendications précédentes, dans lequel le seuil de rugosité de l'accessoire (5, 6) étant un premier seuil de rugosité de l'accessoire (5, 6), les moyens automatisés empêchent le passage à l'étape c) si la valeur relative à la rugosité de l'accessoire (5, 6) n'est pas comprise dans une plage formée par le premier seuil de rugosité de l'accessoire (5, 6) et un deuxième seuil de rugosité de l'accessoire (5, 6), différent du premier seuil de rugosité de l'accessoire (5, 6).

10. Procédé l'une quelconque des revendications précédentes, dans lequel au moins l'une des conditions prédéterminées de l'étape d) est que la valeur relative à la propreté du tube (4) ou la valeur relative à la propreté de l'accessoire (5, 6) est inférieure, respectivement, au seuil de propreté du tube (4) ou au seuil de propreté de l'accessoire (5, 6), ou bien au moins l'une des conditions prédéterminées de l'étape d) est que la valeur relative à la propreté du tube (4) ou la valeur relative à la propreté de l'accessoire (5, 6) est supérieure, respectivement, au seuil de propreté du tube (4) ou au seuil de propreté de l'accessoire (5, 6).

11. Procédé selon l'une quelconque des revendications précédentes, dans lequel le seuil de propreté du tube (4) étant un premier seuil de propreté du tube (4), les moyens automatisés empêchent le passage à l'étape e) si la valeur relative à la propreté du tube (4) n'est pas comprise dans une plage formée par le premier seuil de propreté du tube (4) et un deuxième seuil de propreté du tube (4), différent du premier seuil de propreté du tube (4).

12. Procédé selon l'une quelconque des revendications précédentes, dans lequel le seuil de propreté de l'accessoire (5, 6) étant un premier seuil de propreté de l'accessoire (5, 6), les moyens automatisés empêchent le passage à l'étape e) si la valeur relative à la propreté de l'accessoire (5, 6) n'est pas comprise dans une plage formée par le premier seuil de propreté de l'accessoire (5, 6) et un deuxième seuil de propreté de l'accessoire (5, 6), différent du premier seuil de propreté de l'accessoire (5, 6).

13. Procédé selon l'une quelconque des revendications précédentes, comprenant en outre une étape de détermination d'une quantité d'énergie requise pour un soudage en fonction de la valeur relative à une température du tube (4) et de la valeur relative à une température de l'accessoire (5, 6).

14. Procédé selon l'une quelconque des revendications précédentes, dans lequel le procédé est automatisé.

15. Procédé de soudage d'un tube (4) en matière polymère et d'un accessoire (5, 6) en matière polymère pour former une canalisation de gaz, dans lequel on met en œuvre le procédé de vérification selon l'une quelconque des revendications précédentes.

16. Programme comprenant des instructions de code aptes à commander la mise en œuvre d'un procédé selon l'une quelconque des revendications précédentes lorsqu'il est exécuté sur un ordinateur.

17. Support d'enregistrement comprenant un programme selon la revendication précédente sous forme enregistrée.

18. Dispositif de vérification avant soudage d'un tube (4) en matière polymère et d'un accessoire (5, 6) en matière polymère, **caractérisé en ce qu'**il comprend
- des premiers moyens agencés pour déterminer des valeurs respectives relatives à la rugosité du tube (4) et de l'accessoire (5, 6),
- des deuxièmes moyens agencés pour déterminer des valeurs respectives relatives à la propreté du tube (4) et de l'accessoire (5, 6),
- des moyens automatisés agencés pour empêcher l'utilisation des deuxièmes moyens si une condition prédéterminée entre la valeur relative à la rugosité du tube (4) et un seuil de rugosité du tube (4) n'est pas remplie ou si une condition prédéterminée entre la valeur relative à la rugosité de l'accessoire (5, 6) et un seuil de rugosité de l'accessoire (5, 6) n'est pas remplie,
- des troisièmes moyens agencés pour mesurer des valeurs relatives à la température du tube (4) et de l'accessoire (5, 6),
- les moyens automatisés étant agencés pour empêcher l'utilisation des troisièmes moyens si une condition prédéterminée entre la valeur relative à la propreté du tube (4) et un seuil de propreté du tube (4) n'est pas remplie, ou si une condition prédéterminée entre la valeur relative à la propreté de l'accessoire (5, 6) et un seuil de propreté de l'accessoire (5, 6) n'est pas remplie,
- des moyens de montage de l'accessoire (5, 6) sur le tube (4),
- les moyens automatisés étant agencés pour empêcher l'utilisation des moyens de montage si une condition prédéterminée entre la valeur relative à la température du tube (4) et une plage de températures n'est pas remplie, ou si une condition prédéterminée entre la valeur relative à la température de l'accessoire (5, 6) et la plage de températures n'est pas remplie.

## Patentansprüche

1. Verfahren zur Überprüfung eines Rohrs (4) aus Polymermaterial und eines Zubehörteils (5, 6) aus Polymermaterial vor dem Schweißen, **dadurch gekennzeichnet, dass** es die folgenden Schritte in der folgenden Reihenfolge umfasst:
a) Bestimmen der jeweiligen Werte für die Rauheit des Rohrs (4) und des Zubehörteils (5, 6),
b) wenn mindestens eine der folgenden Bedingungen nicht erfüllt ist:
- eine vorbestimmte Bedingung zwischen dem Wert für die Rauheit des Rohrs (4) und einem Rauheitsschwellenwert des Rohrs (4),
- eine vorbestimmte Bedingung zwischen dem Wert für die Rauheit des Zubehörteils (5, 6) und einem Rauheitsschwellenwert des Zubehörteils (5, 6), verhindern automatisierte Mittel den Übergang zu Schritt c),
c) Bestimmen der jeweiligen Werte für die Sauberkeit des Rohrs (4) und des Zubehörteils (5, 6),
d) wenn mindestens eine der folgenden Bedingungen nicht erfüllt ist:
- eine vorbestimmte Bedingung zwischen dem Wert für die Sauberkeit des Rohrs (4) und einem Sauberkeitsschwellenwert für das Rohr (4),
- eine vorbestimmte Bedingung zwischen dem Wert für die Sauberkeit des Zubehörteils (5, 6) und einem Sauberkeitsschwellenwert für das Zubehörteil (5, 6), verhindern die automatisierten Mittel den Übergang zu Schritt e), und
e) Bestimmen der jeweiligen Werte für die Temperatur des Rohrs (4) und des Zubehörteils (5, 6),
f) wenn mindestens eine der folgenden Bedingungen nicht erfüllt ist:
- eine vorbestimmte Bedingung zwischen dem Wert für die Temperatur des Rohrs (4) und einem Temperaturbereich,
- eine vorbestimmte Bedingung zwischen dem Wert für eine Temperatur des Zubehörteils (5, 6) und dem Temperaturbereich,
verhindern die automatisierten Mittel den Übergang zu Schritt g),
g) Montage des Zubehörteils (5, 6) am Rohr (4).

2. Verfahren nach Anspruch 1, umfassend einen Schritt des Abschabens des Rohrs (4) vor Schritt a).

3. Verfahren nach Anspruch 1 oder 2, wobei Schritt a) die Erstellung einer Darstellung der Rauheit des Rohrs (4) und des Zubehörteils (5, 6) umfasst.

4. Verfahren nach einem der vorstehenden Ansprüche, bei dem:
- wenn die vorbestimmte Bedingung zwischen dem relativen Wert der Rauheit des Rohrs (4) und dem Rauheitsschwellenwert des Rohrs (4) nicht erfüllt ist, das Rohr (4) an einem zuvor nicht abgeschabten Abschnitt abgeschabt wird und anschließend Schritt a) wiederholt wird, und
- wenn die vorbestimmte Bedingung zwischen dem relativen Wert für die Rauheit des Zubehörteils (5, 6) und dem Rauheitsschwellenwert des Zubehörteils (5, 6) nicht erfüllt ist,
das Zubehörteil (5, 6) ersetzt wird und anschließend Schritt a) wiederholt wird.

5. Verfahren nach einem der vorstehenden Ansprüche, wobei Schritt c) die Erstellung einer Darstellung der Sauberkeit des Rohrs (4) und des Zubehörteils (5, 6) umfasst.

6. Verfahren nach einem der vorstehenden Ansprüche, wobei:
- wenn die vorbestimmte Bedingung zwischen dem Wert für die Sauberkeit des Rohrs (4) und dem Sauberkeitsschwellenwert des Rohrs nicht erfüllt ist, ein Reinigungsschritt des Rohrs (4) durchgeführt wird und anschließend Schritt c) wiederholt wird, und
- wenn die vorbestimmte Bedingung zwischen dem Wert für die Sauberkeit des Zubehörteils (5, 6) und dem Sauberkeitsschwellenwert des Zubehörteils (5, 6) nicht erfüllt ist, ein Reinigungsschritt für das Zubehörteils (5, 6) durchgeführt wird und anschließend Schritt c) wiederholt wird.

7. Verfahren nach einem der vorstehenden Ansprüche, wobei mindestens eine der vorgegebenen Bedingungen des Schritts b) darin besteht, dass der Wert für die Rauheit des Rohrs (4) oder der Wert für die Rauheit des Zubehörteils (5, 6) jeweils unter dem Rauheitsschwellenwert des Rohrs (4) bzw. dem Rauheitsschwellenwert des Zubehörteils (5, 6) liegt, oder zumindest eine der vorbestimmten Bedingungen des Schritts b) darin besteht, dass der Wert für die Rauheit des Rohrs (4) oder der Wert für die Rauheit des Zubehörteils (5, 6) jeweils über dem Rauheitsschwellenwert des Rohrs (4) bzw. dem Rauheitsschwellenwert des Zubehörteils (5, 6) liegt.

8. Verfahren nach einem der vorstehenden Ansprüche, wobei der Rauheitsschwellenwert des Rohrs (4) ein erster Rauheitsschwellenwert des Rohrs (4) ist, die automatisierten Mittel den Übergang zu Schritt c) verhindern, wenn der Wert für die Rauheit des Rohrs (4) nicht in einem Bereich liegt, der durch den ersten Rauheitsschwellenwert des Rohrs (4) und einen zweiten Rauheitsschwellenwert des Rohrs (4), der sich vom ersten Rauheitsschwellenwert des Rohrs (4) unterscheidet, gebildet wird.

9. Verfahren nach einem der vorstehenden Ansprüche, wobei der Schwellenwert für die Rauheit des Zubehörteils (5, 6) ein erster Schwellenwert für die Rauheit des Zubehörteil Zubehörteils (5, 6) ist, wobei die automatisierten Mittel den Übergang zu Schritt c) verhindern, wenn der Wert für die Rauheit des Zubehörteils (5, 6) nicht in einem Bereich liegt, der durch den ersten Rauheitsschwellenwert des Zubehörteils (5, 6) und einen zweiten Rauheitsschwellenwert des Zubehörteils (5, 6) gebildet wird, der sich vom ersten Rauheitsschwellenwert des Zubehörteils (5, 6) unterscheidet.

10. Verfahren nach einem der vorstehenden Ansprüche, wobei mindestens eine der vorbestimmten Bedingungen in Schritt d) darin besteht, dass der Wert für die Sauberkeit des Rohrs (4) oder der Wert für die Sauberkeit des Zubehörteils (5, 6) unter dem Sauberkeitsschwellenwert des Rohrs (4) bzw. dem Sauberkeitsschwellenwert des Zubehörteils (5, 6) liegt, oder zumindest eine der vorbestimmten Bedingungen des Schritts d) darin besteht, dass der Wert für die Sauberkeit des Rohrs (4) oder der Wert für die Sauberkeit des Zubehörteils (5, 6) über dem Sauberkeitsschwellenwert des Rohrs (4) bzw. dem Sauberkeitsschwellenwert des Zubehörteils (5, 6) liegt.

11. Verfahren nach einem der vorstehenden Ansprüche, wobei der Reinheitsschwellenwert des Rohrs (4) ein erster Reinheitsschwellenwert des Rohrs (4) ist, die automatisierten Mittel den Übergang zu Schritt e) verhindern, wenn der Wert für die Sauberkeit des Rohrs (4) nicht in einem Bereich liegt, der durch den ersten Sauberkeitsschwellenwert des Rohrs (4) und einen zweiten Sauberkeitsschwellenwert des Rohrs (4), der sich vom ersten Sauberkeitsschwellenwert des Rohrs (4) unterscheidet, gebildet wird.

12. Verfahren nach einem der vorstehenden Ansprüche, wobei der Sauberkeitsschwellenwert des Zubehörteils (5, 6) ein erster Sauberkeitsschwellenwert des Zubehörteils (5, 6) ist, wobei die automatisierten Mittel den Übergang zu Schritt e) verhindern, wenn der Wert für die Sauberkeit des Zubehörteils (5, 6) nicht in einem Bereich liegt, der durch den ersten Sauberkeitsschwellenwert des Zubehörteils (5, 6) und einen zweiten Sauberkeitsschwellenwert des Zubehörteils (5, G) gebildet wird, der sich vom ersten Sauberkeitsschwellenwert des Zubehörteils (5, 6) unterscheidet.

13. Verfahren nach einem der vorstehenden Ansprüche, das zusätzlich einen Schritt zum Bestimmen einer für das Schweißen erforderlichen Energiemenge in Abhängigkeit von dem Wert für eine Temperatur des Rohrs (4) und dem Wert für eine Temperatur des Zubehörteils (5, 6) umfasst.

14. Verfahren nach einem der vorstehenden Ansprüche, wobei das Verfahren automatisiert ist.

15. Verfahren zum Verschweißen eines Rohrs (4) aus Polymermaterial und eines Zubehörteils (5, 6) aus Polymermaterial zur Bildung einer Gasleitung, bei dem das Prüfverfahren gemäß einem der vorstehenden Ansprüche angewendet wird.

16. Programm mit Codeanweisungen, die geeignet sind, die Durchführung eines Verfahrens gemäß einem der vorstehenden Ansprüche zu steuern, wenn es auf einem Computer ausgeführt wird.

17. Aufzeichnungsmedium, das ein Programm gemäß dem vorhergehenden Anspruch in aufgezeichneter Form aufweist.

18. Vorrichtung zur Überprüfung vor dem Verschweißen eines Rohrs (4) aus Polymermaterial und eines Zubehörteils (5, 6) aus Polymermaterial, **dadurch gekennzeichnet, dass** sie aufweist
- erste Mittel, die dazu ausgelegt sind, jeweilige Werte für die Rauheit des Rohrs (4) und des Zubehörteils (5, 6) zu bestimmen,
- zweite Mittel, die dazu ausgelegt sind, jeweilige Werte für die Sauberkeit des Rohrs (4) und des Zubehörteils (5, 6) zu bestimmen,
- automatisierte Mittel, die dazu ausgelegt sind, die Verwendung der zweiten Mittel zu verhindern, wenn eine vorbestimmte Bedingung zwischen dem Wert bezüglich der Rauheit des Rohrs (4) und einem Rauheitsschwellenwert des Rohrs (4) nicht erfüllt ist oder wenn eine vorbestimmte Bedingung zwischen dem Wert bezüglich der Rauheit des Zubehörteils (5, 6) und einem Schwellenwert für die Rauheit des Zubehörteils (5, 6) nicht erfüllt ist,
- dritte Mittel, die dazu ausgelegt sind, Werte in Bezug auf die Temperatur des Rohrs (4) und des Zubehörteils (5, 6) zu messen,
- wobei die automatisierten Mittel so ausgelegt sind, dass sie die Verwendung der dritten Mittel verhindern, wenn eine vorbestimmte Bedingung zwischen dem Wert für die Sauberkeit des Rohrs (4) und einem Schwellenwert für die Sauberkeit des Rohrs (4) nicht erfüllt ist oder wenn eine vorbestimmte Bedingung zwischen dem Wert für die Sauberkeit des Zubehörteils (5, 6) und einem Sauberkeitsschwellenwert des Zubehörteils (5, 6) nicht erfüllt ist,
- Mittel zum Anbringen des Zubehörteils (5, 6) an dem Rohr (4),
- wobei die automatisierten Mittel so ausgelegt sind, dass sie die Verwendung der Befestigungsmittel verhindern, wenn eine vorgegebene Bedingung zwischen dem Wert für die Temperatur des Rohrs (4) und einem Temperaturbereich nicht erfüllt ist oder wenn eine vorgegebene Bedingung zwischen dem Wert für die Temperatur des Zubehörteils (5, 6) und dem Temperaturbereich nicht erfüllt ist.

## Claims

1. A method for verifying, prior to welding, a tube (4) made of a polymer material and a fitting (5, 6) made of a polymer material, **characterized in that** it comprises the following steps in the following order:
a) determining respective values relating to the roughness of the tube (4) and of the fitting (5, 6),
b) if at least one of the following conditions is not fulfilled:
- a predetermined condition between the value relating to the roughness of the tube (4) and a roughness threshold of the tube (4),
- a predetermined condition between the value relating to the roughness of the fitting (5, 6) and a roughness threshold of the fitting (5, 6),
automated means prevent proceeding to step c),
c) determining respective values relating to the cleanliness of the tube (4) and of the fitting (5, 6),
d) if at least one of the following conditions is not fulfilled:
- a predetermined condition between the value relating to the cleanliness of the tube (4) and a cleanliness threshold of the tube (4),
- a predetermined condition between the value relating to the cleanliness of the fitting (5, 6) and a cleanliness threshold of the fitting (5, 6),
the automated means prevent proceeding to step e), and
e) determining respective values relating to a temperature of the tube (4) and of the fitting (5, 6),
f) if at least one of the following conditions is not fulfilled:
- a predetermined condition between the value relating to a temperature of the tube (4) and a temperature range,
- a predetermined condition between the value relating to a temperature of the fitting (5, 6) and the temperature range,
the automated means prevent proceeding to step g),
g) assembling the fitting (5, 6) onto the tube (4).

2. The method according to claim 1, comprising a step of scraping the tube (4) prior to step a).

3. The method according to claim 1 or 2, wherein step a) comprises producing a representation of the roughness of the tube (4) and of the fitting (5, 6).

4. The method according to any one of the preceding claims, wherein:
- when the predetermined condition between the value relating to the roughness of the tube (4) and the roughness threshold of the tube (4) is not fulfilled, the tube (4) is scraped on a previously non-scraped portion, and step a) is repeated, and
- when the predetermined condition between the value relating to the roughness of the fitting (5, 6) and the roughness threshold of the fitting (5, 6) is not fulfilled, the fitting (5, 6) is replaced, and step a) is repeated.

5. The method according to any one of the preceding claims, wherein step c) comprises producing a representation of the cleanliness of the tube (4) and of the fitting (5, 6).

6. The method according to any one of the preceding claims, wherein:
- when the predetermined condition between the value relating to the cleanliness of the tube (4) and the cleanliness threshold of the tube (4) is not fulfilled, a step of cleaning the tube (4) is performed, and step c) is repeated, and
- when the predetermined condition between the value relating to the cleanliness of the fitting (5, 6) and the cleanliness threshold of the fitting (5, 6) is not fulfilled, a step of cleaning the fitting (5, 6) is performed, and step c) is repeated.

7. The method according to any one of the preceding claims, wherein at least one of the predetermined conditions of step b) is that the value relating to the roughness of the tube (4) or the value relating to the roughness of the fitting (5, 6) is respectively lower than the roughness threshold of the tube (4) or the roughness threshold of the fitting (5, 6), or wherein at least one of the predetermined conditions of step b) is that the value relating to the roughness of the tube (4) or the value relating to the roughness of the fitting (5, 6) is respectively higher than the roughness threshold of the tube (4) or the roughness threshold of the fitting (5, 6).

8. The method according to any one of the preceding claims, wherein the roughness threshold of the tube (4) being a first roughness threshold of the tube (4), the automated means prevent proceeding to step c) if the value relating to the roughness of the tube (4) is not within a range formed by the first roughness threshold of the tube (4) and a second roughness threshold of the tube (4), different from the first roughness threshold of the tube (4).

9. The method according to any one of the preceding claims, wherein the roughness threshold of the fitting (5, 6) being a first roughness threshold of the fitting (5, 6), the automated means prevent proceeding to step c) if the value relating to the roughness of the fitting (5, 6) is not within a range formed by the first roughness threshold of the fitting (5, 6) and a second roughness threshold of the fitting (5, 6), different from the first roughness threshold of the fitting (5, 6).

10. The method according to any one of the preceding claims, wherein at least one of the predetermined conditions of step d) is that the value relating to the cleanliness of the tube (4) or the value relating to the cleanliness of the fitting (5, 6) is respectively lower than the cleanliness threshold of the tube (4) or the cleanliness threshold of the fitting (5, 6), or wherein at least one of the predetermined conditions of step d) is that the value relating to the cleanliness of the tube (4) or the value relating to the cleanliness of the fitting (5, 6) is respectively higher than the cleanliness threshold of the tube (4) or the cleanliness threshold of the fitting (5, 6).

11. The method according to any one of the preceding claims, wherein the cleanliness threshold of the tube (4) being a first cleanliness threshold of the tube (4), the automated means prevent proceeding to step e) if the value relating to the cleanliness of the tube (4) is not within a range formed by the first cleanliness threshold of the tube (4) and a second cleanliness threshold of the tube (4), different from the first cleanliness threshold of the tube (4).

12. The method according to any one of the preceding claims, wherein the cleanliness threshold of the fitting (5, 6) being a first cleanliness threshold of the fitting (5, 6), the automated means prevent proceeding to step e) if the value relating to the cleanliness of the fitting (5, 6) is not within a range formed by the first cleanliness threshold of the fitting (5, 6) and a second cleanliness threshold of the fitting (5, 6), different from the first cleanliness threshold of the fitting (5, 6).

13. The method according to any one of the preceding claims, further comprising a step of determining an amount of energy required for welding as a function of the value relating to a temperature of the tube (4) and the value relating to a temperature of the fitting (5, 6).

14. The method according to any one of the preceding claims, wherein the method is automated.

15. A method for welding a tube (4) made of a polymer material and a fitting (5, 6) made of a polymer material to form a gas pipeline, wherein the verification method according to any one of the preceding claims is implemented.

16. A program comprising code instructions suitable for controlling the implementation of a method according to any one of the preceding claims when executed on a computer.

17. A recording medium comprising a program according to the preceding claim in recorded form.

18. A device for verifying, prior to welding, a tube (4) made of a polymer material and a fitting (5, 6) made of a polymer material, **characterized in that** it comprises:
- first means arranged to determine respective values relating to the roughness of the tube (4) and of the fitting (5, 6),
- second means arranged to determine respective values relating to the cleanliness of the tube (4) and of the fitting (5, 6),
- automated means arranged to prevent the use of the second means if a predetermined condition between the value relating to the roughness of the tube (4) and a roughness threshold of the tube (4) is not fulfilled, or if a predetermined condition between the value relating to the roughness of the fitting (5, 6) and a roughness threshold of the fitting (5, 6) is not fulfilled,
- third means arranged to measure values relating to the temperature of the tube (4) and of the fitting (5, 6),
- the automated means being arranged to prevent the use of the third means if a predetermined condition between the value relating to the cleanliness of the tube (4) and a cleanliness threshold of the tube (4) is not fulfilled, or if a predetermined condition between the value relating to the cleanliness of the fitting (5, 6) and a cleanliness threshold of the fitting (5, 6) is not fulfilled,
- means for assembling the fitting (5, 6) onto the tube (4),
- the automated means being arranged to prevent the use of the assembling means if a predetermined condition between the value relating to the temperature of the tube (4) and a temperature range is not fulfilled, or if a predetermined condition between the value relating to the temperature of the fitting (5, 6) and the temperature range is not fulfilled.
